# EUROPEAN PATENT APPLICATION

(11) **EP 4 730 061 A1**
(43) Date of publication of application: **22.04.2026**
(21) Application number: 25194885.7
(22) Date of filing: 08.08.2025
(51) Int. Cl.: G05B 23/02, G06N 20/00, B64D 45/00, F02C 9/00

(54) **METHOD AND APPARATUS FOR TRAINING AND EMPLOYING A MACHINE LEARNING MODEL TO IDENTIFY FAILED COMPONENTS**

(30) Priority: 16.10.2024 US 202418917414
(71) Applicant: General Electric Company, Cincinnati, Ohio 45215 (US)
(72) Inventor: FAN, Chun, Lynn, 01910 (US); PAUL, Jacques Michel-Alexander, Lynn, 01910 (US); WINN, Andrew Kevin, Niskayuna, 12309 (US)
(74) Representative: Openshaw & Co.

(57) **Abstract**

A trained machine learning model identifies that a real-world apparatus has a failed component, which trained machine learning model has been trained with a training corpus that includes content generated by synthesizing a plurality of synthesized operating examples for a given apparatus, wherein at least some of the plurality of synthesized operating examples are generated via a simulation modeling environment that receives as input characterizing information that corresponds to any of a variety of failure states for a component of the given apparatus.

## Description

### GOVERNMENT INTERESTS

This invention was made with government support under FA8617-18-D-6219 awarded by the U.S. Air Force. The government has certain rights in the invention.

### TECHNICAL FIELD

These teachings relate generally to machine learning models and more particularly to the training and use thereof.

### BACKGROUND

Many apparatuses, such as turbine engine aircraft, have numerous components. At least some such components may be subject to failure states over time.

### BRIEF DESCRIPTION OF DRAWINGS

Various needs are at least partially met through provision of the method and apparatus for training and employing a machine learning model to identify failed components described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a block diagram as configured in accordance with various embodiments of these teachings;
FIG. 2 comprises a flow diagram as configured in accordance with various embodiments of these teachings;
FIG. 3 comprises a chart as configured in accordance with various embodiments of these teachings;
FIG. 4 comprises a schematic representation in accordance with various embodiments of these teachings; and
FIG. 5 comprises a chart as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

Many apparatuses, such as turbine engine aircraft, comprise numerous components. Being physical in nature, many such components are subject to wear and tear over time and with use. Accordingly, many such components may enter a failure state. Such a situation can lead to diminished efficiency and/or operability of the corresponding apparatus.

In some cases, there may be a specific sensor that can serve to reliably and discretely detect a failure state for a given corresponding component. Unfortunately, not all components may be reliably monitored in such a direct way, and/or it may be otherwise unacceptable to discreetly monitor each and every component (and component state) on a given apparatus. For example, attempting to provide such ubiquitous and discrete monitoring capability may present weight-based challenges, an inability to physically fit the necessary sensors in a constrained operating environment, undue economic burdens, and so forth. It is also possible that some components cannot be directly monitored in any practical manner.

These are significant challenges in the context of aviation application settings.

Generally speaking, the various aspects of the present disclosure can be employed with a trained machine learning model that identifies that a real-world apparatus has a failed component, which trained machine learning model has been trained with a training corpus that includes content generated by synthesizing a plurality of synthesized operating examples for a given apparatus, wherein at least some of the plurality of synthesized operating examples are generated via a simulation modeling environment that receives as input characterizing information that corresponds to one or to any of a variety of failure states for a component of the given apparatus.

These teachings will accommodate use with a wide variety of physical apparatuses across various technologies and application settings and their corresponding components. By one approach, the aforementioned given apparatus and the real-world apparatus may both comprise a gas turbine engine. In such a case, the aforementioned component may comprise a pneumatic pathway (such as a so-called pipe within a turbine engine).

By one approach, the aforementioned simulation modeling environment may comprise a high fidelity aero-thermodynamic cycle simulation modeling environment. These teachings will support using any of a wide variety of information items as inputs for the simulation modeling environment. Examples in those regards include, but are not limited to, at least one, two, three, or more of flight condition information, information regarding propulsion system operating states, characterizing information that corresponds to a failure state for the component, information regarding normal deterioration of the component, information regarding normal apparatus-to-apparatus variations, information regarding normal variations in installation effects, information regarding normal variations in sensor and effector accuracies, and information regarding normal variations in apparatus thermal states, to note but a few examples.

By one approach, in lieu of the foregoing or in combination therewith, synthesizing the plurality of synthesized operating examples for the given apparatus can further comprise sweeping through one or more value ranges for at least some of the training input.

These teachings will then accommodate inputting real-world operating information corresponding to the real-world apparatus into the aforementioned trained machine learning model. In the above example, where the real-world apparatus comprises a turbine engine and the component comprises a pneumatic pathway in a turbine engine as comprises a part thereof, the real-world operating information might comprise flight condition information and/or information comprising engine operating parameters.

By one approach, inputting the real-world operating information into the trained machine learning model can comprise first inputting at least some of the real-world operating information corresponding to the real-world apparatus into latching logic and then outputting real-world operating information corresponding to the real-world apparatus from the latching logic into the trained machine learning model.

The teachings will also accommodate the trained machine learning model outputting information that identifies that a component in the real-world apparatus has failed. By one approach, this can comprise aggregating the information that identifies that a component in the real-world apparatus has failed over time and outputting a failed component flag upon achieving a predetermined level of aggregation.

So configured, these teachings can facilitate identifying a failed component notwithstanding a lack of component-specific sensors and/or component-specific information that might otherwise directly permit detecting such a state. It will further be appreciated that these teachings are readily scalable and can be implemented on-board or off-board with respect to the apparatus. (As an illustrative example, these teachings can be located on-board an aircraft by being included within a full authority digital engine control (FADEC) or can be located off-board an aircraft by being included in an apparatus that is not physically part of and is not being carried by the aircraft (although the off-board apparatus may be communicatively coupled to one or more elements of the aircraft).) If desired, a simplified machine learning algorithm can be implemented in an on-board machine learning model (that is optimized, for example, for memory usage and throughput) while a more complicated and sophisticated algorithm can be implemented in an off-board machine learning model (that is optimized, for example, for accuracy). These on-board and off-board algorithms can work in tandem, if desired, to provide timely and accurate identification of a faulty component. It will be further appreciated that these teachings do not rely upon, and can operate successfully without use of, look-up tables having failure state information stored therein.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

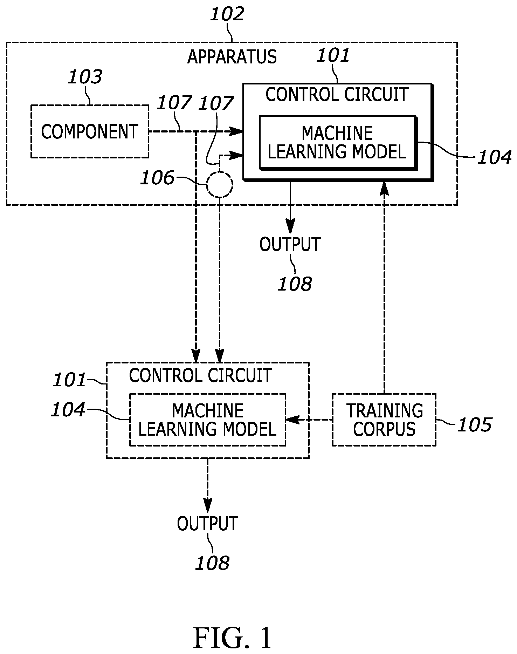

The foregoing and other benefits may become clearer upon making a thorough review and study of the following detailed description. Referring now to the drawings, and in particular to FIG. 1, an illustrative application setting that is compatible with many of these teachings will now be presented.

As used herein, the expression "real-world" refers to something (such as an apparatus or software code) that is a tangible, operational device or system that exists in the practical environment, outside of theoretical models or simulations, and which is designed to perform specific tasks under the constraints and variables found in everyday life. For example, unlike idealized or conceptual versions sometimes used in academic problems or preliminary design stages, a real-world apparatus must contend with factors such as material imperfections, environmental conditions, human-machine interactions, and maintenance concerns.

This illustrative application setting includes a control circuit 101 that may be located on-board a corresponding real-world apparatus 102 (or at least on-board a larger apparatus that includes the real-world apparatus - for example, the real-world apparatus 102 may comprise a turbine engine that is itself included in a larger real-world apparatus comprising an aircraft, which aircraft includes the control circuit 101 as an on-board feature; as used herein, the expression "on-board" will be understood to encompass and include both such examples) or off-board (as illustrated by the control circuit 101 shown in phantom lines and where "off-board" will be understood to encompass and include physical structures that are not a part of, and are not carried by, the apparatus). (The aforementioned turbine engine may comprise, for example, a jet turbine engine as well as any number of other types of turbine engine, include but not limited to a turbofan engine, a turboprop engine, a turboshaft engine, a propfan engine, open fan turbine engines, and so forth.)

These teachings will also accommodate a control circuit that has portions of itself on-board the apparatus 102 and portions that are off-board the apparatus 102. In addition, if desired, these teachings will accommodate having a complete control circuit 101 on-board the apparatus 102 and a complete control circuit 101 off-board the apparatus 102 (in which case, the two control circuits 101 may work in cooperation with one another, or work independently of one another, as appropriate to the needs and/or opportunities presented by the application setting).

Being a "circuit," the control circuit 101 comprises structure that includes at least one (and typically many) electrically-conductive paths (such as paths comprised of a conductive metal such as copper or silver) that convey electricity in an ordered manner, which path(s) will also typically include corresponding electrical components (both passive (such as resistors and capacitors) and active (such as any of a variety of semiconductor-based devices) as appropriate) to permit the circuit to effect the control aspect of these teachings. The "circuit" may also include wireless communications capability if desired.

Such a control circuit 101 can comprise a fixed-purpose hard-wired hardware platform (including but not limited to an application-specific integrated circuit (ASIC) (which is an integrated circuit that is customized by design for a particular use, rather than intended for general-purpose use), a field-programmable gate array (FPGA), and the like) or can comprise a partially or wholly-programmable hardware platform (including but not limited to microcontrollers, microprocessors, and the like). These architectural options for such structures are well known and understood in the art and require no further description here. This control circuit 101 is configured (for example, by using corresponding programming as will be well understood by those skilled in the art) to carry out one or more of the steps, actions, and/or functions described herein.

It will be appreciated that the control circuit 101 may comprise a single integrated platform or may comprise a plurality of such circuits that work in cooperation with one another.

The control circuit 101 may include or otherwise access digital memory. This memory may be integral to the control circuit 101 or can be physically discrete (in whole or in part) from the control circuit 101 as desired. This memory can also be local with respect to the control circuit 101 (where, for example, both share a common circuit board, chassis, power supply, and/or housing) or can be partially or wholly remote with respect to the control circuit 101 (where, for example, the memory is physically located in another facility, metropolitan area, or even country as compared to the control circuit 101). As with the control circuit 101 in general, the memory may comprise a singular structure or may comprise a plurality of memory platforms that collectively comprise the "memory."

This memory can serve, for example, to non-transitorily store the computer instructions that, when executed by the control circuit 101, cause the control circuit 101 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as a dynamic random access memory (DRAM).)

By one optional approach, the control circuit 101 may also include and/or otherwise be operably coupled to a user interface. This user interface can comprise any of a variety of user-input mechanisms (such as, but not limited to, keyboards and keypads, cursor-control devices, touch-sensitive displays, speech-recognition interfaces, gesture-recognition interfaces, and so forth) and/or user-output mechanisms (such as, but not limited to, visual displays, audio transducers, printers, and so forth) to facilitate receiving information and/or instructions from a user and/or providing information to a user.

If desired, the control circuit 101 can also include a network interface. So configured, the control circuit 101 can communicate with other elements (both within the apparatus 102 and external thereto) via the network interface. Network interfaces, including both wireless and non-wireless platforms, are well understood in the art and require no particular elaboration here.

The real-world apparatus 102 includes at least one component 103. As used herein, "component" refers to a physical structure that is at least partially mechanical in nature. For the sake of an illustrative example, and without intending any limitations in these regards, when the real-world apparatus 102 comprises a turbine engine, the component 103 may comprise a part of that turbine engine. For example, a turbine engine typically includes one or more pneumatic pathways (sometimes referred to as pipes) that move air around the turbine engine to effect cooling or pressurization.

As one such example, there are pneumatic pathways that move cold air from a compressor to cool the high pressure turbine (HPT) and the low pressure turbine (LPT). It is noted that a broken cooling pneumatic pathway can cause rising temperatures in the HPT or LPT chamber, which can lead to rotating parts grinding into a suboptimal structure. The rising temperature can also shorten the corresponding operational life.

As another such example, pneumatic pathways move air from the compressor to pressurize secondary air systems such as sumps. If a pneumatic pathway breaks, insufficient sump pressure may cause corresponding bearing damage.

As will be described in more detail below, the control circuit 101 includes a trained machine learning model 104 (which has been trained using a corresponding training corpus 105 that is described in more detail below). These teachings will accommodate any of a variety of machine learning models, including neural networks generally, gaussian mixture models, support vector machines, random forest/decision tree classifiers, and so forth. For the sake of an illustrative example, but without intending to suggest any limitations in these regards, many examples in this description present the trained machine learning model 104 as being a neural network.

Generally speaking, the control circuit 101 has an input that is configured to receive real-world operating information 107 corresponding to the real-world apparatus 102 and to input that received real-world operating information 107 into the trained machine learning model 104 (e.g., the trained neural network). That real-world operating information 107 may comprise either or both of information received from the component itself 103 and information received from elsewhere 106 in the apparatus 102 (from example, from other sensors in the apparatus 102.) The control circuit 101 also has an output configured to output information 108 identifying that a component 103 in the real-world apparatus 102 has failed.

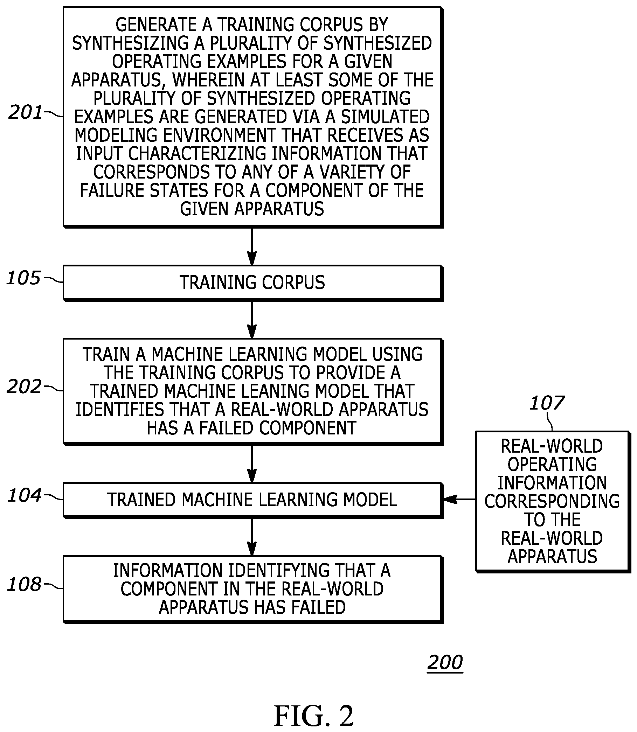

FIG. 2 presents a process 200 that can be carried out, for example, by the aforementioned control circuit 101. Block 201 provides for generating a training corpus (such as the aforementioned training corpus 105) by synthesizing a plurality of synthesized operating examples for a given apparatus (such as, for the sake of an illustrative example, a turbine engine), wherein at least some of the plurality of synthesized operating examples are generated via a simulation modeling environment that receives as input characterizing information that corresponds to any of a variety of failure states for a component of the given apparatus as well as (a likely large amount of) input that includes normal operating state information.

By one approach, the aforementioned simulation modeling environment can comprise a high fidelity aero-thermodynamic cycle simulation modeling environment such as, but not limited to, a Numerical Propulsion System Simulation (NPSS). NPSS is an advanced software tool developed by the National Aeronautics and Space Administration and the aerospace industry to model and simulate the performance of aircraft propulsion systems. NPSS integrates a variety of individual component models, such as those for engines, compressors, turbines, and other related subsystems, to predict the overall behavior of the propulsion system under various operating conditions.

The aforementioned input can comprise a wide variety of information. As an illustrative example, in the case where the given apparatus comprises a turbine engine, that input can comprise at least one, two, three, four, or more of (including all of) flight condition information, information regarding propulsion system operating states, characterizing information that corresponds to a failure state for the component, information regarding normal deterioration for the component, information regarding normal apparatus-to-apparatus variations (including, for example, variations that are due to manufacturing tolerances), information regarding normal variations in installation effects, information regarding normal variations in sensor and effector accuracies, and information regarding normal variations in apparatus and/or component thermal states.

By one approach, synthesizing the plurality of synthesized operating examples for the given apparatus can include sweeping through value ranges for at least some of the input. For example, a parameter corresponding to a thermal state can be varied, degree by degree (or some other increment of choice), over some given range of temperatures.

The number of synthesized operating examples so generated can vary as desired with respect at least to the needs of and/or the opportunities present by a given application setting. In the illustrative example of a jet turbine engine having components comprising pneumatic pathways, the number of synthesized operating examples may beneficially number in the tens of thousands (such as, for example, ten thousand, twenty thousand, fifty thousand, one hundred thousand, and so forth). To be clear, not each and every such synthesized operating example will include or represent a failure state for the component or for any other part of the apparatus, but at least some such examples will represent a failure state scenario.

At block 202, this process 200 provides for training a machine learning model (such as a neural network) using the above generated training corpus 105 to provide a trained machine learning model (such as the above-described trained machine learning model 104) that can identify that a real-world apparatus has a failed component. When, for example, the aforementioned given apparatus comprises a turbine engine, the real-world apparatus can also comprise a turbine engine. These teachings will accommodate having both such engines be a same type of engine as manufactured by a same manufacturer, but will also accommodate differences as between the engines.

By one approach, and as an illustrative example, the trained machine learning model 104 may be configured as a logistic regression machine learning model. Logistic regression is a statistical method used in machine learning for binary classification tasks, where the goal is to predict a discrete outcome (usually two classes, such as "yes" or "no"). It operates by using a logistic function, often referred to as the sigmoid function, to model the probability that a given input belongs to a particular category. The logistic function takes any real-valued number and maps it into a value between 0 and 1, which can be interpreted as the probability of the input belonging to the positive class. The model is trained by adjusting the weights (coefficients) of the input features such that the predicted probabilities are as close as possible to the actual class labels in the training data, usually by minimizing a cost function like cross-entropy using optimization techniques like gradient descent. Logistic regression is simple and efficient and can make minimal use of on-board resources (such as memory and computational resources).

By another approach, and as another illustrative example, the machine learning model may be configured as a multi-layer perceptron (with 1 hidden layer) machine learning model. Multi-layer perceptron (MLP) (with one hidden layer) is a type of feedforward artificial neural network that consists of three layers of nodes: an input layer, a single hidden layer, and an output layer. Each node, or neuron, in one layer is connected to every node in the subsequent layer through weighted connections. The input layer receives the input features and passes signals to the hidden layer, where the signals are transformed using a weighted sum followed by a non-linear activation function, such as a sigmoid or ReLU function (a ReLU (Rectified Linear Unit) function is an activation function that can be used in neural networks that outputs the input itself if it is positive, and zero otherwise; it is mathematically defined as f(x) = max(0, x), which helps to introduce nonlinearity in the model while being computationally efficient). The hidden layer's purpose is to extract relevant features or patterns from the input data. The processed signals are then passed to the output layer, which produces the final prediction or classification. During training, the MLP adjusts the weights of the connections using a method like backpropagation, in combination with an optimization algorithm like gradient descent, to minimize the difference between the predicted output and the actual target values, thereby learning to make accurate predictions on unseen data. Such an approach is more resource intensive than the aforementioned logistic regression approach but also tends to produce results that are more accurate.

And by yet another approach, and as another illustrative example, the machine learning model may be configured as a general multi-layer perceptron machine learning model. A general multi-layer perceptron approach employs multiple hidden layers, allowing for complex representations and the ability to learn more intricate patterns in data. Each additional hidden layer allows the network to create more sophisticated features by combining the features from the previous layer, thus enabling the multi-layer perceptron machine learning model to solve more complex problems that involve, for example, hierarchical feature representations. This approach again represents an increase in resources but offers further improved accuracy.

As noted above, these teachings will accommodate having more than one machine learning model trained in the foregoing regards. One such machine learning model could be installed on-board with the apparatus/component while another such machine learning model could be installed off-board. It may be noted that these teachings will accommodate having machine learning model that are differently configured from one another in terms of their algorithmic approach. For an on-board machine learning model, the machine learning model may utilize, for example, a logistic regression approach in order to minimize on-board supporting resources. An off-board machine learning model, on the other hand, may utilize, for example, a multi-layer perceptron (with 1 hidden layer) approach or a general multi-layer perceptron approach to achieve greater accuracy while possibly leveraging greater supporting resources than might be available for the on-board neural network.

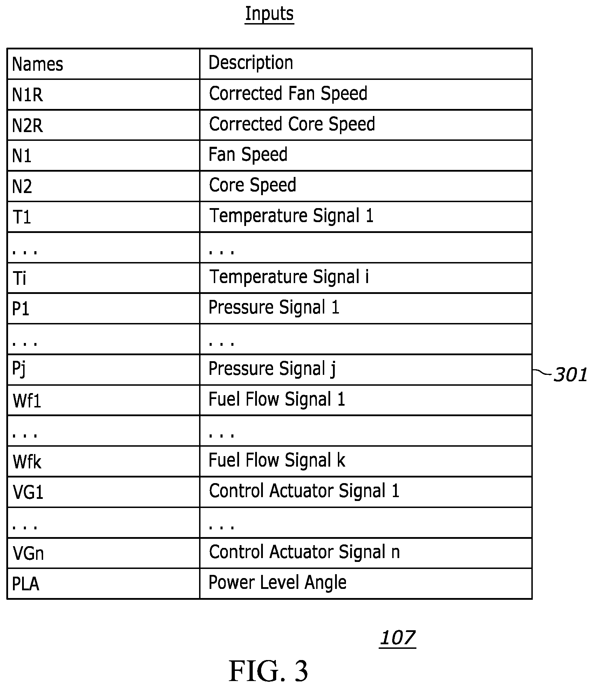

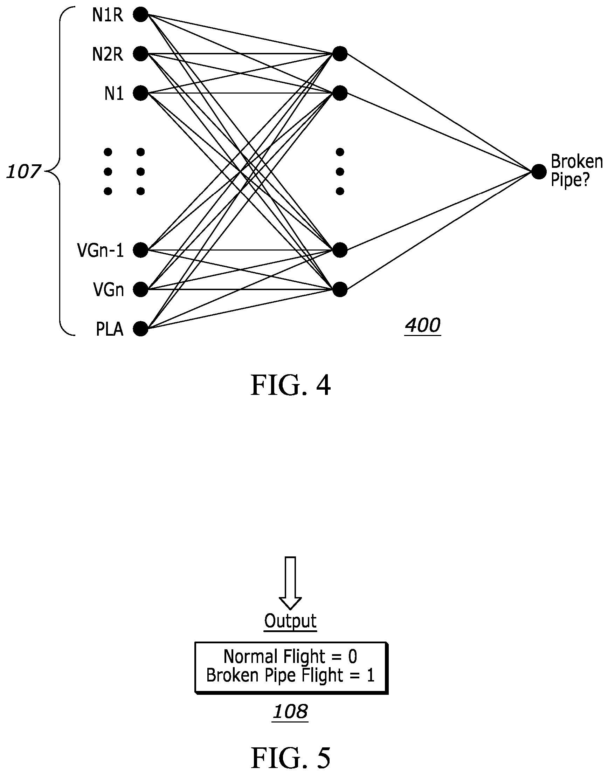

As illustrated in FIG. 2, real-world operating information 107 corresponding to the real-world apparatus can be input into the trained machine learning model 104. This real-world operating information 107 may, or may not, be directly related to the component 103 of interest. In the illustrative example where the real-world apparatus comprises a turbine engine, this real-world operating information 107 may comprise flight condition information and information comprising engine operating parameters. Referring momentarily to FIG. 3, an example of such engine operating parameters 301 as presented as comprising the real-world operating information 107. FIG. 4, in turn, generally illustrates providing that real-world operating information 107 as inputs to the machine learning model 400 that comprises at least a part of the trained machine learning model 104.

By one approach, inputting the real-world operating information 107 corresponding to the real-world apparatus into the trained machine learning model 104 can comprise first inputting at least some of the real-world operating information 107 corresponding to the real-world apparatus into latching logic and then outputting real-world operating information corresponding to the real-world apparatus from the latching logic into the trained machine learning model 104. This latching logic can be configured, for example, to test the input data for acceptability criteria. As one illustrative example, this testing can comprise checking to confirm that a power setting is in a certain range and to also check a rolling window for, say, three pre-selected engine parameters to confirm that these engine parameters are within an acceptable range to thereby check that the turbine engine is operating in a reasonably stable way before allowing the input data to then make its way to the trained machine learning model 104.

As illustrated at block 108 in FIG. 2, the trained machine learning model 104 then outputs information identifying whether the component of interest in the real-world apparatus has failed. FIG. 5 presents an illustrative example in these regards, where the output comprises a binary indication that the component is either operating normally or appears to be faulty.

By one approach, outputting from the trained machine learning model 104 information identifying that a component in the real-world apparatus has failed can include aggregating the information identifying that a component in the real-world apparatus has failed over time and (only) outputting a failed component flag upon achieving a predetermined level of aggregation. This approach may help to filter out any short-lived transient spikes in the output of the trained machine learning model 104. This aggregation may comprise, for example, processing the output through a median filter. A median filter is a non-linear digital filtering technique, sometimes used in signal processing and image processing, to remove noise from a signal or image. Such a filter serves to move through the signal entry-by-entry, replacing each entry with the median of neighboring entries within a specified window size. The median is calculated by sorting the values from the window into numerical order and choosing the middle value, ensuring that extreme values (which could represent noise) do not have as much influence as they do with mean filters.

Such output can be employed in a variety of ways and via various modalities. Examples include automatically forwarding corresponding alert and/or maintenance instructions to one or more persons (via, for example, email, text or in-app messaging, shared virtual workspace chat messaging, facsimile transmission, and so forth) and/or by presenting corresponding information on a display (for example, on a cockpit display in an aircraft). The sharing of that output can lead directly to maintenance activity to repair or replace one or more identified components to thereby ensure continued viable operation of the component(s) and other components/apparatuses that depend upon such component(s). If desired, the results of such maintenance activity can be further leveraged (for example, by incorporating the results of such experiences into the aforementioned training corpus 105).

Further aspects of the disclosure are provided by the subject matter of the following clauses:
Clause 1. A method comprising: generating a training corpus by synthesizing a plurality of synthesized operating examples for a given apparatus, wherein at least some of the plurality of synthesized operating examples are generated via a simulation modeling environment that receives as input characterizing information that corresponds to any of a variety of failure states for a component of the given apparatus; training a machine learning model using the training corpus to provide a trained machine learning model that identifies that a real-world apparatus has a failed component.
Clause 2. The method of clause 1 wherein the given apparatus and the real-world apparatus both comprise a gas turbine engine.
Clause 3. The method of either of clause 1 and 2 wherein the component comprises a pneumatic pathway.
Clause 4. The method of any of clauses 1 through 3 wherein the simulation modeling environment comprises a high fidelity aero-thermodynamic cycle simulation modeling environment.
Clause 5. The method of clause 4 wherein generating the training corpus by synthesizing the plurality of synthesized operating examples for the given apparatus further comprises generating synthesized operating examples via a simulation modeling environment that receives as input at least three of: flight condition information; information regarding propulsion system operating states; characterizing information that corresponds to a failure state for the component; information regarding normal deterioration; information regarding normal apparatus-to-apparatus variation; information regarding normal variation in installation effects; information regarding normal variation in sensor and effector accuracies; and information regarding normal variation in apparatus thermal states.
Clause 6. The method of clause 5 wherein synthesizing the plurality of synthesized operating examples for the given apparatus further comprises sweeping through value ranges for at least some of the input.
Clause 7. A method comprising: providing a trained machine learning model that identifies that a real-world apparatus has a failed component, which trained machine learning model has been trained with a training corpus that includes content generated by synthesizing a plurality of synthesized operating examples for a given apparatus, wherein at least some of the plurality of synthesized operating examples are generated via a simulation modeling environment that receives as input characterizing information that corresponds to any of a variety of failure states for a component of the given apparatus; inputting real-world operating information corresponding to the real-world apparatus into the trained machine learning model; outputting from the trained machine learning model information identifying that a component in the real-world apparatus has failed.
Clause 8. The method of clause 7 wherein the given apparatus and the real-world apparatus both comprise a gas turbine engine.
Clause 9. The method of either of clause 7 and 8 wherein the component comprises a pneumatic pathway.
Clause 10. The method of any of clauses 7 through 9 wherein the simulation modeling environment comprises a high fidelity aero-thermodynamic cycle simulation modeling environment.
Clause 11. The method of any of clauses 7 through 10 wherein generation of the training corpus further comprises generating the synthesized operating examples via a simulation modeling environment that receives as input at least three of: flight condition information; information regarding propulsion system operating states; characterizing information that corresponds to a failure state for the component; information regarding normal deterioration; information regarding normal apparatus-to-apparatus variation; information regarding normal variation in installation effects; information regarding normal variation in sensor and effector accuracies; and information regarding normal variation in apparatus thermal states.
Clause 12. The method of any of clauses 7 through 11 wherein the real-world operating information comprises flight condition information and information comprising engine operating parameters.
Clause 13. The method of clause 12 wherein the trained machine learning model is onboard the real-world apparatus.
Clause 14. The method of clause 12 wherein the trained machine learning model is off-board the real-world apparatus.
Clause 15. The method of any of clauses 7 through 14 wherein inputting real-world operating information corresponding to the real-world apparatus into the trained machine learning model comprises first inputting at least some of the real-world operating information corresponding to the real-world apparatus into latching logic and then outputting real-world operating information corresponding to the real-world apparatus from the latching logic into the trained machine learning model.
Clause 16. The method of any of clauses 7 through 15 wherein outputting from the trained machine learning model information identifying that a component in the real-world apparatus has failed comprises aggregating the information identifying that a component in the real-world apparatus has failed over time and outputting a failed component flag upon achieving a predetermined level of aggregation.
Clause 17. An apparatus comprising: a control circuit configured as a trained machine learning model that identifies that a real-world apparatus has a failed component, which trained machine learning model has been trained with a training corpus that includes content generated by synthesizing a plurality of synthesized operating examples for a given apparatus, wherein at least some of the plurality of synthesized operating examples are generated via a simulation modeling environment that receives as input characterizing information that corresponds to any of a variety of failure states for a component of the given apparatus.
Clause 18. The apparatus of clause 17 wherein the control circuit has an: input configured to receive real-world operating information corresponding to the real-world apparatus and inputting that received real-world operating information into the trained machine learning model; output configured to output information identifying that a component in the real-world apparatus has failed.
Clause 19. The apparatus of either of clause 17 and 18 wherein the given apparatus and the real-world apparatus both comprise a gas turbine engine.
Clause 20. The apparatus of any of clauses 17 through 19 wherein the component comprises a pneumatic pathway.
Clause 21. The apparatus or method of any of clauses 1 through 20 wherein there is insufficient availability of at least one necessary technical resource to otherwise permit sensing failure of the component.
Clause 22. The apparatus or method of clause 21 wherein the at least one necessary technical resource includes at least one of a sensor capable of directly sensing the failure of the component, sufficient physical space in the apparatus to accommodate a sensor capable of directly sensing the failure of the component, a cost-effective sensor capable of directly sensing the failure of the component.

## Claims

1. A method comprising:
generating (201) a training corpus (105) by synthesizing a plurality of synthesized operating examples for a given apparatus, wherein at least some of the plurality of synthesized operating examples are generated via a simulation modeling environment that receives as input characterizing information that corresponds to any of a variety of failure states for a component of the given apparatus;
training (202) a machine learning model (1040 using the training corpus to provide a trained machine learning model that identifies that a real-world apparatus (102) has a failed component (103).

2. The method of claim 1, wherein the given apparatus and the real-world apparatus (102) both comprise a gas turbine engine.

3. The method of claim 2, wherein the component (103) comprises a pneumatic pathway.

4. The method of any of claims 1-3, wherein the simulation modeling environment comprises a high fidelity aero-thermodynamic cycle simulation modeling environment.

5. The method of claim 4, wherein generating the training corpus by synthesizing the plurality of synthesized operating examples for the given apparatus further comprises generating synthesized operating examples via the simulation modeling environment that receives as input at least three of:
flight condition information;
information regarding propulsion system operating states;
characterizing information that corresponds to a failure state for the component;
information regarding normal deterioration;
information regarding normal apparatus-to-apparatus variation;
information regarding normal variation in installation effects;
information regarding normal variation in sensor and effector accuracies; and
information regarding normal variation in apparatus thermal states.

6. The method of claim 5, wherein synthesizing the plurality of synthesized operating examples for the given apparatus further comprises sweeping through value ranges for at least some of the input.

7. An apparatus comprising:
a control circuit (101) configured as a trained machine learning model (104) that identifies that a real-world apparatus (102) has a failed component (103), which trained machine learning model has been trained (202) with a training corpus (105) that includes content generated (201) by synthesizing a plurality of synthesized operating examples for a given apparatus, wherein at least some of the plurality of synthesized operating examples are generated via a simulation modeling environment that receives as input characterizing information that corresponds to any of a variety of failure states for a component of the given apparatus.

8. The apparatus of claim 7, wherein the control circuit has an:
input configured to receive real-world operating information corresponding to the real-world apparatus and inputting that received real-world operating information into the trained machine learning model;
output configured to output information identifying that a component in the real-world apparatus has failed.

9. The apparatus of claims 7 or 8, wherein the given apparatus and the real-world apparatus both comprise a gas turbine engine.

10. The apparatus of claim 9, wherein the component comprises a pneumatic pathway.

11. The apparatus of any of claims 7-10, wherein the simulation modeling environment comprises a high fidelity aero-thermodynamic cycle simulation modeling environment.

12. The apparatus of claim 11, wherein generating the training corpus by synthesizing the plurality of synthesized operating examples for the given apparatus further comprises generating synthesized operating examples via the simulation modeling environment that receives as input at least three of:
flight condition information;
information regarding propulsion system operating states;
characterizing information that corresponds to a failure state for the component;
information regarding normal deterioration;
information regarding normal apparatus-to-apparatus variation;
information regarding normal variation in installation effects;
information regarding normal variation in sensor and effector accuracies; and
information regarding normal variation in apparatus thermal states.

13. The apparatus of claim 12, wherein synthesizing the plurality of synthesized operating examples for the given apparatus further comprises sweeping through value ranges for at least some of the input.
